# EUROPÄISCHE PATENTSCHRIFT

(11) **EP 0 773 260 B1**
(45) Veröffentlichungstag und Bekanntmachung des Hinweises auf die Patenterteilung: **25.07.2001**
(21) Anmeldenummer: 96117561.9
(22) Anmeldetag: 02.11.1996
(51) Int. Cl.: C08L 33/06, C08L 23/30, C08L 51/06, C10M 157/00

(54) **Polymeremulsionen mit bimodaler Molekulargewichtsverteilung**
Polymer emulsions with a bimodal molecular weight distribution
Emulsions de polymères à distributions de poids moléculaires bimodales

(30) Priorität: 11.11.1995 DE 19542120
(43) Veröffentlichungstag der Anmeldung: 14.05.1997
(73) Patentinhaber: Röhm GmbH & Co. KG, 64293 Darmstadt (DE)
(72) Erfinder: Pennewiss, Horst, Dr., 64289 Darmstadt (DE); Beyer, Claudia, Dr., 64342 Seeheim-Jugenheim (DE); Jelitte, Rüdiger, Dr., Bridgewater, NJ 08802 (US); Will, Bernhard, Dr., 65191 Wiesbaden (US); Auschra, Clemens, Dr., 55122 Mainz (DE); Omeis, Jürgen, Dr., 64404 Bickenbach (DE)

(56) Entgegenhaltungen:
- Keine einschlägigen Dokumente gefunden

## Beschreibung

### Stand der Technik

Seit Ende der Siebziger Jahre verfügt die Technik über Lösungskonzentrate von Polyalkylmethacrylat (PAMA)- und Polyolefin-Additiven (OCP) in Mischung, die sich für alle praktischen Zwecke als verträglich erwiesen haben, sogenannte "Mixed Polymers" (H. Pennewiß und P. Neudörfl in "Tribology 2000", 8th Colloquium, 14. - 16.01.1992, Bd. 1, Ed. W.J. Bar, Technische Akademie Esslingen).
Den beiden Polymerklassen, die an sich in einem gemeinsamen Lösungsmittel unverträglich sind, dienen kleinere Mengen eines PAMA-OCP-Pfropfcopolymerisats als "Compatibilizer". Übliche Formulierungen enthalten ca. 65 - 75 Gew.-Teile PAMA und 25 - 35 Gew.-Teile OCP bezogen auf Trockenmengen. In der Regel liegt das Lösungsmittelähnliche Polymer in der kontinuierlichen Phase vor, während das andere Polymer sich in der diskontinuierlichen, micellaren Phase aufhält. Bei Zugabe von polaren Lösungsmitteln, wie z.B. den Esterölen, tritt Phaseninversion ein (vgl. R.M. Mortier, S.T. Orszulik, The Chemistry and Technology of Lubricants VCH 1992; DE-A 29 05 954, USA 4,290.925, DE-A 32 07 291, US-A 4.677.151, DE-A 32 07 292, US-A 4.622.358 und US-A 4.665.121).

In den genannten "Mixed Polymers" beträgt der Anteil an Trägermedien, die notwendigerweise die Poly(meth)acrylate gut und die Olefincopolymerisate schlecht lösen, etwa 45 -65 Gew.-%. Als einschlägig verwendbare Trägermedien kommen in erster Linie Esteröle, wie z. B. Dibutylphthalat oder Adipinsäureoctylester oder Trimethyladipinsäureoctylester in Frage. Mineralöle und Poly-α-Olefine, die gute Lösungsmittel für Poly(meth)acrylate und Olefincopolymere sind, können in solchem Umfang mitverwendet werden, wie ihre Lösekraft für Olefincopolymerisate durch die darin gelösten Poly(meth)acrylate in genügendem Maße herabgesetzt wird.

### Aufgabe und Lösung

Von modernen Öladditiven kann nicht nur die unerläßliche Viskositäts-Index-verbessernde Wirkung (VII) sondern in steigendem Maße auch eine Dispergier-/Detergenzwirkung erwartet werden.
Die geschilderten Lösungen des Standes der Technik beruhen auf der Ausnutzung komplexer Verhaltensweisen der beiden polymeren Additiv-Klassen in Zusammenwirkung mit dem "Compatibilizer" und den Lösemittelsystemen. Zwar haben sich diese sogenannten "Mixed Polymers" welche die Vorteile beider Verbindungsklassen vereint zur Wirkung bringen, in der Praxis ausgezeichnet bewährt, es bestand aber nach wie vor der Wunsch nach Additiv-Konzentraten, die bei Anwendung auch eine möglichst effektive Dispergierwirkung entfalten sollten. Gleichzeitig waren aber noch weitere Gesichtspunkte wie Verträglichkeit mit Elastomeren und wiederum die Stabilität und das Viskositätsverhalten der gebildeten Emulsionen zu berücksichtigen (vgl. Ullmann's Encyclopedia of Industrial Chemistry, 5th Ed., Vol. A15, 448 - 465, 463ff, VCH 1990).

Es wurde nun gefunden, daß die erfindungsgemäß konzentrierten Polymeremulsionen mit bimodaler Molekulargewichtsverteilung der Additive die Forderungen der Technik in hohem Maße erfüllen. Die Erfindung betrifft somit konzentrierte Polymeremulsionen PEM aus zur Verbesserung des Viskositätsindex geeigneten Poly(meth)acrylsäureestern und Olefincopolymeren zur Verwendung als Öladditive, wobei die disperse Phase aus Olefincopolymeren (OCP) in einer kontinuierlichen Phase aus Poly(meth)acrylaten mit bimodaler Molekulargewichtsverteilung verteilt ist und als stabilisierendes Agens für die Phasenverteilung ein Pfropf- oder Blockcopolymerisat aus Olefincopolymerisaten und (Meth)acrylsäureestern enthalten.
Die vorliegende Erfindung bedient sich dabei der Erkenntnis, daß dispergierwirksame Cooligomere bzw. Niedercopolymere (d-Oligomere) geeignete Trägermedien für die Polymeremulsionen darstellen, da sie Poly(meth)acrylate gut und Olefincopolymere schlecht lösen. Es gelingt somit, die bisher üblichen Trägermedien weitgehend durch d-Oligomer zu ersetzen. Aufgrund der hervorragenden Dispergierwirkung besteht andererseits die Möglichkeit, bei der Herstellung von Schmierölformulierungen auf eine weitere Zugabe sogenannter Ashless Dispersants über DI-Pakete zu verzichten bzw. einen Großteil der "Ashless Dispersants" des DI-Pakets zu ersetzen.
Die Verwendung der d-Cooligomeren (d-OM) als Trägermedien für konzentrierte Polymeremulsionen PEM aus Poly(meth)acrylat und Olefincopolymeren setzt voraus, daß die als Niederpolymer vorliegende Komponente mit einem gewichtsmittleren Molekulargewichtsbereich von 5 000 bis 30 000 Dalton mit den hochpolymeren Poly(meth)acrylsäureestern mit gewichtsmittlerem Molekulargewicht 50 000 bis 500 000 Dalton verträglich sind.

(Bestimmung des Molekulargewichts durch Size Exclusion Chromatography, SEC, vgl. H.F. Mark et al. Encyclopedia of Polymer Science and Technology, Vol. 10, 1 - 19, J. Wiley 1987).
Die erfindungsgemäßen konzentrierten Polymeremulsionen PEM stellen daher Emulsionen von Poly(meth)acrylaten (PAMA) und Olefiincopolymerisaten (OCP) in d-Oligomeren als Trägermedium dar, wobei OCP-PAMA-Copolymerisate als Emulgatoren fungieren.
Erfindungsgemäß wird diese Verträglichkeit dadurch erreicht, daß in die hochpolymeren Poly(meth)acrylate (HP) gleiche oder ähnliche polare Comonomere eingebaut werden, wie sie in d-Oligomer enthalten sind. Vorzugsweise werden die Konzentrationen der Monomeren und Polymeren so bemessen, daß der Gehalt an Polymer-Additiv im Trägermedium d-OM im Bereich 40 bis 90 Gew.-% liegt. Die bimodale Molekulargewichtsverteilung kommt dadurch zustande, daß die niedermolekularen Bestandteile, in der Regel in einem (gewichtsmittleren) Molekulargewichtsbereich von 5 000 - 30 000, die hochpolymeren Poly(meth)acrylate HP in einem Bereich von 50 000 bis 500 000 liegen.
Die erfindungsgemäß eingesetzten, als Trägermedium fungierenden d-Oligomere d-OM können beispielsweise aufgebaut sein aus den Komponenten:
A) 60 - 95 Gew.-% mindestens eines (Meth)acrylsäureesters der Formel I 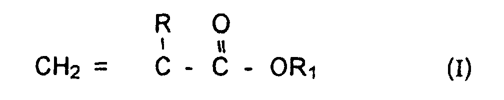 worin R für Wasserstoff oder Methyl und R₁ für einen gegebenenfalls verzweigten Alkylrest oder einen Cycloalkylrest mit 4 bis 32, vorzugsweise 6 bis 30, insbesondere 8 bis 26 Kohlenstoffatomen im Alkylrest und
B) 0 - 40 Gew.-% vorzugsweise 5 - 40 mindestens eines Monomeren aus der Gruppe der (Meth)acrylsäureester der Formel II 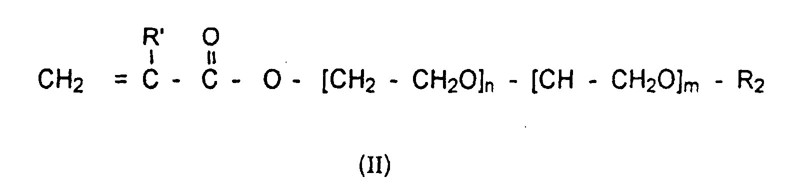 worin R' für Wasserstoff oder Methyl und R₂ für einen Alkyl- oder einen Arylrest mit 1 bis 50 Kohlenstoffatomen steht, wobei R₂ selbst durch Stickstoff oder Schwefel substituiert sein kann und worin n einen Zahlenwert 5 bis 100 und m einen Zahlenwert 0 bis 100 darstellen kann und/oder Hydroxyalkyl(meth)acrylsäureester der Formel III 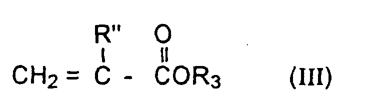 worin R" für Wasserstoff oder Methyl und R₃ für einen mit mindestens einer Hydroxylgruppe substituierten Alkylrest mit 2 bis 26, insbesondere 2 bis 12 Kohlenstoffatomen steht und/oder
C) 0 bis 30 Gew.-% mindestens eines stickstoff-haltigen Monomers der Formeln IV-A und/oder IV-B 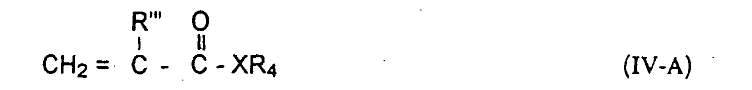 worin
   - X: für Sauerstoff oder -NH oder -NR₅ und
   - R'": für Wasserstoff oder Methyl steht und R₄ für einen mit mindestens einer Gruppe -NR₆R₇ substituierten, gegebenenfalls verzweigten Alkylrest mit 2 bis 20, vorzugsweise 2 bis 6 Kohlenstoffatomen, wobei R₆ und R₇ unabhängig voneinander für einen Alkylrest mit 1 bis 20, vorzugsweise 1 bis 6 Kohlenstoffatomen stehen oder worin R₆ und R₇ unter Einbeziehung des Stickstoffatoms und gegebenenfalls eines weiteren Stickstoff- oder Sauerstoffatoms einen 5- oder 6-gliedrigen Ring bilden, der gegebenenfalls mit C₁-C₆-Alkyl substituiert sein kann und worin R₅ für einen Alkylrest mit 1 bis 6 Kohlenstoffatomen steht, und/oder eine vinylische heterocyclische Verbindung der Formel IV-B 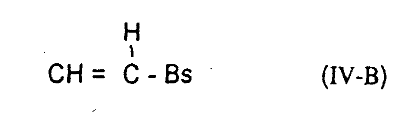
   worin
   - Bs: einen fünf- oder sechsgliedrigen Heterocyclus, vorzugsweise aus der Gruppe in der Bs für einen Pyridin-, Carbazol-, Imidazol und insbesondere einen Pyrrolidon-Rest steht, bedeutet,
D) 0 - 75 Gew.-Teile bezogen auf die Summe von A), B) und C) mindestens eines 1-Alkens mit 4 bis 32, vorzugsweise 4 bis 22 Kohlenstoffatomen im Molekül, mit der Maßgabe, daß sich A), B) und C) zu 100 Gew.-% ergänzen. Erwähnt seien als Monomere der Formeln IV-A bzw. IV-B beispielsweise das Dimethylaminopropylmethacrylamid und das Morpholinoethylmethacrylat oder das N-Vinylpyrrolidon.

Von besonderem Interesse sind u.a. Cooligomere und NiederCopolymere d-OM, bei denen der Rest R₂ in Formel II mit mindestens einer Gruppe -NR₃R₄ substituiert ist, wobei R₃ und R₄ unabhängig voneinander für einen Alkylrest mit 1 bis 20 Kohlenstoffatomen stehen oder worin R₃ und R₄ unter Einbeziehung des Stickstoffatoms und gegebenenfalls eines weiteren Sauerstoff- oder Stickstoffatoms einen fünf- oder sechsgliedrigen Ring bilden, der mit einem C₁-C₆-Alkylrest substituiert sein kann.

Genannt seien beispielsweise die Dimethylaminogruppe, die Diethylaminogruppe, die Methylisopropylaminogruppe, die Piperidinogruppe, die Pyrrolidinogruppe, die Pyridingruppe, die Morpholinogruppe u.ä. Dispergierwirksame Cooligomere des oben genannten Typs sind auch in der (unveröffentlichten) deutschen Patentanmeldung P 44 23 358.2 beschrieben.

### Die Cooligomeren d-OM

Die mittleren Molekulargewichte (M_{w}) der Cooligomeren und Nieder-Copolymeren d-OM liegen im Bereich 3 000 bis 30 000 Dalton, insbesondere im Bereich 5 000 bis 30 000 Dalton (Bestimmung durch Gelpermeationschromatographie, s. H.F. Mark et al. Encyclopedia of Polymer Science and Technology, Vol. 10, 1 - 19, J. Wiley 1987; J.V. Dawkins, Comprehensive Polymer Science, Vol. 1, 231 (1989), Pergamon Press).
Als Monomeren der Formel I kommen besonders (Meth)-acrylsäureester vom Gemischen höherer Alkohole, insbesondere aus dem Bereich C₉ bis C₂₀, insbesondere C₁₀ bis C₁₈ mit wechselnden Verzweigungsgraden im Bereich 25 bis über 80 %, z.B. solche, die aus den großtechnischen Herstellungsverfahren wie der Oxosynthese anfallen, in Betracht.
Genannt seien z.B. die Ester der sogenannten DOBANOL ®-Alkohole (Produkte der Fa. Shell), der sogenannte ALFOL ®-Alkohole (Produkte der Fa. Condea), der sogenannten LOROL ®-Alkohole, der Talgfettalkohole u.ä.

Von besonderem Interesse sind z.B. Ester von Alkoholgemischen aus isomeren Isodecylalkoholen, Estern von Alkoholgemischen aus isomeren Isoundecylalkoholen, ferner Ester eines Alkoholgemischs mit Durchschnitts-C-Zahl 13,2 - 13,8 und einem überwiegenden Gehalt an C₁₂-C₁₅-Alkoholen (DOBANOL ®25L). Gut brauchbar sind auch die Ester von cyclischen Alkanolen, z.B. mit 5 bis 8 Ringkohlenstoffatomen, wie z.B. von Cyclopentanol, Cyclohexanol, Cyclooctanol, Benzylalkohol, alkylsubstituierte Cyclohexanole wie z.B. 4-tert.-Butylcyclohexanol.

Als Verbindungen der Formel II kommen z.B. die (Meth)acrylsäureester von alkoxylierten aliphatischen Alkoholen, wie z.B. alkoxyliertem Butanol und weitere alkoxylierte Alkohole, ausgehend von: Methanol, Ethanol, Propanol, Pentanol (+ Isomere), Hexanol (+ Isomere), Cyclohexanol, Methylcyclohexanol, 2-Ethylhexanol und höheren aliphatischen einwertigen Alkoholen, wie Isodecylalkohol, Isoundecylalkohol, Isotridecylalkohol, aus natürlichen Rohstoffen hergestellte Fettalkohole usw. infrage. Desweiteren kommen infrage: alkoxylierte Phenole, z.B. basierend auf: Phenol, alkylsubstituierten Phenolen, z.B. t-Butylphenol, 2,6-Dimethylphenol, isomere Gemische, techn. Alkylphenole, z. B. Octylphenol, Nonylphenol, Dinonylphenol, Naphthol, alkylsubstituierte Naphthole. Weiter kommen infrage EO/PO-Anlagerungsprodukte an substituierte Alkohole, z.B. Furfurol, Tetrahydrofurfurol, 2-Methoxybutanol, 3-Methoxybutanol, 2-Dimethylaminoethanol, 2-Diethylaminoethanol, 1-Dimethylamino-2-propanol, 3-Dimethylamino-1-propanol, 2-Morpholinoethanol, 2-(2-Pyridyl)ethanol, N-(2-Hydroxyethyl)-piperidin, N-(2-Hydroxyethyl)pyrrolidin, N-(2-Hydroxyethyl)pyrrolidon.

Genannt seien z.B. Alkohole, die ein (statistisches) Anlagerungsprodukt von Ethylenoxid und Propylenoxid an einen Alkohol, wie z. B. Butanol, darstellen. Als Anhalt für das Molekulargewicht von bevorzugten Monomeren der Formel II sei der Bereich um ca. 2 000 Dalton angegeben. Dies stellt jedoch keine Limitierung dar. Je nach Alkoxylierungsgrad (n + m, Formel II) und je nach Größe des Restes R₂ können auch höhere Molekulargewichte bis ca. 5 000 oder aber niedere Molekulargewichte bis ca. 500 Dalton erreicht werden.

Die Monomeren der Formel II können selbst als Mischung bestehend aus Methacrylaten der verschiedenen oben beschriebenen alkoxylierten Alkohole vorliegen.

Die Monomeren der Formel D) stellen die radikalisch polymerisierbaren 1-Alkene mit 4 bis 32 Kohlenstoffatomen dar. Genannt seien insbesondere die C₄-C₁₆-Alkene, zum Beispiel das 1-Decen, 1-Octen, 1-Dodecen, 1-Tetradecen, 1-Hexadecen und auch 1-Octadecen, 1-Eicosen.
Die Herstellung der dispergierwirksamen Oligomeren (d-OM) wird nach den Regeln und Erfahrungen der Radikalpolymerisation vorgenommen [vgl. C.H. Bamford, Encyclopedia of Polymer Science, Vol. 13, 708, 2nd. Ed. 1988)].

Wie bereits aus dem Stand der Technik erkenntlich, setzen sich die im Rahmen der vorliegenden Erfindung zugänglich gemachten, konzentrierten Polymeremulsionen PEM, auf der Polymerseite aus Olefin(co)polymerisaten (OCP) einerseits, Polyalkyl(meth)acrylaten (PAMA) andererseits und einem emulgierend wirksamen Copolymerisat aus beiden Polymerklassen zusammen.

Maßgeblich für das technische Funktionieren erscheint nach bisher vorliegenden Erkenntnissen die Bedingung, daß die hochpolymeren Poly(meth)acrylate gleiche oder ähnliche polare Comonomere einpolymerisiert enthalten, wie sie in den d-Oligomeren enthalten sind.

Die Polyalkyl(meth)acrylate HP gemäß der vorliegenden Erfindung sind demnach aufgebaut aus
α) 40 - 95, vorzugsweise 60 bis 95 Gew.-% mindestens eines (Meth)acrylsäureesters der Formel (I-A) 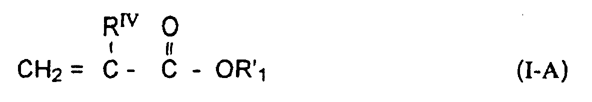 worin
   - R^{IV}: für Wasserstoff oder Methyl und
   - R'₁: für einen gegebenenfalls verzweigten Alkylrest mit 6 - 30, insbesondere 6 - 24 Kohlenstoffatomen und
β) 5 - 30, vorzugsweise 5 - 15 Gew.-% der vorstehend als B) zusammengefaßten Monomeren der Formeln (II), (III) und/oder (IV).

Von erheblicher praktischer Bedeutung ist der Befund, daß bereits durch Einbau von Hydroxyalkyl(meth)acrylsäureestern der Formel III, beispielsweise Hydroxyethyl(meth)-acrylat, Verträglichkeit hergestellt werden kann. Die Methacrylsäureester I-A entsprechen im allgemeinen den einschlägig verwendeten, z. B. als Monomere im PAMA des Standes der Technik eingesetzten.

Genannt seien als Monomere der Formel I-A insbesondere Gemische verschiedenster Ester. So haben sich beispielsweise Gemische aus den Methacrylsäureestern von unverzweigten C₁₆-C₁₈-Alkoholen, dem Methacrylsäureester eines iso-Decylalkohols bewährt.

Weiter sind von Bedeutung (Meth)acrylsäureester von technischen Alkoholgemischen im Bereich C₁₁ bis C₁₆ wie z. B. DOBANOL® -Alkohole (Produkte der Fa. Shell) oder ALFOL® -Alkohole (Produkte der Fa. Condea).

Die zur Gewinnung der verträglichen "Mixed Polymers" erforderlichen Olefincopolymerisate OCP sind an sich bekannt.

### Die Olefincopolymerisate OCP

Die erfindungsgemäß zu verwendenden Olefincopolymerisate sind an sich bekannt. Es handelt sich in erster Linie um aus Ethylen-, Propylen-, Butylen- und/oder weiteren α-Olefinen mit 5 bis 20 C-Atomen aufgebaute Polymerisate, wie sie bereits als VI-Verbesserer empfohlen worden sind. Das Molekulargewicht M_{w} liegt bevorzugt bei 10 000 bis 300 000, besonders bevorzugt zwischen 50 000 und 150 000. Dabei kann das Olefincopolymerisat zur Erhöhung der Scherstabilität in an sich bekannter Weise thermisch-oxidativ etwa auf ein Molekulargewicht im Bereich 1 x 10⁵ abgebaut sein.
Derartige Olefincopolymerisate sind beispielsweise in den deutschen Offenlegungsschriften DE-A 16 44 941, DE-A 17 69 834, DE-A 19 39 037, DE-A 19 63 039 und DE-A 20 59 981 beschrieben. Sofern das Basiscopolymerisat aus einem hydrierten Polyisopren oder Copolymerisat mit Styrol besteht, sind käufliche hydrierte Produkte (z.B. Handelsprodukte SHELLVIS® 50, 200 oder 250) bevorzugt. Besonders gut brauchbar sind Ethylen-Propylen-Copolymere, ebenfalls sind Terpolymere mit den bekannten Terkomponenten, wie Ethyliden-Norbomen [vgl. Macromolecular Reviews, Vol. 10 (1975)] möglich, es ist jedoch deren Neigung zur Vernetzung beim Alterungsprozeß mit einzukalkulieren. Die Verteilung kann dabei weitgehend statistisch sein, es können aber auch mit Vorteil-Sequenz-polymere mit Ethylenbrücken angewendet werden. Das Verhältnis der Monomeren Ethylen-Propylen ist dabei innerhalb gewisser Grenzen variabel, die bei etwa 75 % für Ethylen und etwa 80 % für Propylen als obere Grenze angesetzt werden können. Beispielhaft sei etwa ein Ethylen-Propylencopolymerisat mit 50 Gew.-% Ethylenanteil und einem Molekulargewicht M_{w} von 150 000 angegeben. Infolge seiner verminderten Löslichkeitstendenz in Öl ist bereits Polypropylen weniger geeignet als Ethylen-Propylen-Copolymere.

Die Molekulargewichte M_{w} der Polyalkyl(meth)acrylate liegen wie bereits ausgeführt im Bereich 50 000 bis 500 000. Das zu den erfindungsgemäßen Polymeremulsionen PEM führende Verfahren kann wie folgt durchgeführt werden:

### 1. Herstellung des Emulgators

Dabei kann in einem geeigneten Reaktionsgefäß, zweckmäßig ausgestattet mit Rührer, Thermometer, Rückflußkühler und Dosierleitung, ein Gemisch aus dem OCP, dem (Meth)acrylsäureester der Formel I-A, vorzugsweise einem Gemisch von Estern mit verschiedenen C-Zahlen und mindestens einem Monomeren der vorstehend und B) genannten funktionellen Monomeren, wie beispielsweise einem Hydroxyalkyl(meth)acrylsäureester wie dem Hydroxyethyl-(meth)acrylat vorgelegt werden.
Nach erfolgtem Lösen unter Inertatmosphäre, wie z.B. Stickstoff, unter Erhitzen, beispielsweise auf 110 Grad C, wird ein Anteil eines an sich üblichen Radikalinitiators, beispielsweise aus der Gruppe der Perester, angesetzt, zunächst beispielsweise ca. 0,7 Gew.-% bezogen auf die Monomeren.
Demnach dosiert man über einige Stunden, beispielsweise 3,5 Stunden hinweg ein Gemisch aus den restlichen Monomeren gemäß I-A) und - wie oben ausgeführt - B) unter Zusatz weiteren Initators, beispielsweise ca. 1,3 Gew.-% bezogen auf die Monomeren zu. Dabei kann z B. das Hydroxyethylmethacrylat zur Summe der übrigen (Meth)acrylsäureester im Gewichtsverhältnis ca. 1 : 20 stehen. Man füttert zweckmäßig einige Zeit nach Zulaufende noch etwas Initiator nach, beispielsweise nach zwei Stunden. Die Gesamtpolymerisationsdauer kann als Richtwert beispielsweise mit ca. 8 Stunden angenommen werden. Nach Polymerisationsende verdünnt man zweckmäßig mit einem geeigneten Lösungsmittel, wie z.B. einem Phthalsäureester wie Dibutylphthalat. Man erhält in der Regel eine nahezu klare, viskose Lösung.

### 2. Herstellung der Emulsion

In einem geeigneten, mit Rühreinrichtung (Inter-Mig-Rührer) versehenen Gefäß legt man den nach vorstehendem Verfahren hergestellten Emulgator vor unter Erwärmen, beispielsweise auf 100 Grad C. Dazu gibt man das Polyolefin, vorzugsweise ein Ethylen-Propylen- oder Ethylen-Propylen Dien-Copolymerisat, beispielsweise ein thermisch-oxidativ abgebautes OCP, zu.
Nach dem Eintrag des Polyolefins wird die Temperatur erhöht, beispielsweise auf 140 Grad C und über einige Stunden hinweg zu einer stabilen Emulsion dispergiert. Als Richtwert sei ein Polymerisatgehalt von ca. 60 Gew.-% angegeben.

### 3. Herstellung der erfindungsgemäßen Polymeremulsion durch Abmischen der OCP-Emulsion mit d-Oligomer

Dabei legt man die vorstehend beschriebene OCP-Emulsion in einem mit Rührer, Thermometer und Dosierleitung versehenen Reaktionsgefäß vor und verdünnt die Emulsion vorteilhaft bei erhöhter Temperatur, beispielsweise bei ca. 50 Grad C mit dem d-Oligomer, beispielsweise im Verhältnis ca. 100: 60 Gew.-Teile. Man erhält eine stabile Emulsion.

Die folgenden Beispiele dienen zur Erläuterung der Erfindung.
Die Bestimmung der Viskosität wird nach DIN 51 562 (Ubbelohde-Viskosimeter) vorgenommen.
Der Viskositäts-Index (VIB) wird nach DIN ISO 2909 bestimmt.

### BEISPIELE

### Beispiel 1:

### a) Herstellung einer hochkonzentrierten Mixed Polymer-Vorstufe

### α) Herstellung des Emulgators (= OCP-p-PAMA)

In einem 2 l-Vierhalskolben mit Rührer, Thermometer, Rückflußkühler und Dosierleitung wird folgende Mischung vorgelegt:
- 78,0 g: Äthylen-Propylencopolymerisat (50 % Äthylen; M_{w} = 150 000)
- 442,0 g: Vestinol OA
- 2,6 g: Hydroxiäthylmethacrylat
- 24,8 g: Methacrylsäureester eines unverzweigten C_{16,18}-Alkoholgemisches
- 30,4 g: Methacrylsäureester eines iso-Decylalkohols

Nach Lösen unter Stickstoffatmosphäre bei 110 Grad C werden 0,4 g tert.-Butylperoctoat zugegeben. Dann wird über einen Zeitraum von 3,5 Stunden ein Gemisch aus
- 19,0 g: Hydroxiäthylmethacrylat
- 181,0 g: Methacrylsäureester eines unverzweigten C_{16,18}-Alkoholgemisches
- 222,0 g: Methacrylsäureester eines iso-Decylalkohols
- 5,4 g: tert.-Butylperoctoat
gleichmäßig zudosiert.

2 Stunden nach Zulaufende wird mit 1 g tert.-Butylperoctoat nachgefüttert. Gesamtpolymerisationszeit 8 Stunden. Nach Polymerisationsende wird mit 590,0 g Dibutylphthalat verdünnt. Man erhält eine fast klare, viskose Lösung.

Polymerisatgehalt: 35,1 %
Viskosität bei 100 Grad C: 70 mm²/s
Viskosität bei 40 Grad C: 250 mm²/s
Viskosität (10 %ig in Mineralöl _{η 100 Grad C} = 5,5 mm²/s:
100 Grad C = 9,7 mm²/s
40 Grad C = 53,3 mm²/s
VIB = 148

### β. Herstellung der OCP-Emulsion

In einem 1 l Witt'schen Topf mit Inter-Mig-Rührer (Verhältnis Rührer/Behälterdurchmesser = 0,7; 1 Strombrecher, Rührerdrehzahl ca. 300 Upm) werden 306,4 g Emulgator bei 100 Grad C vorgelegt. Unter Rühren werden portionsweise 193,6 g zerkleinertes Äthylen/Propylencopolymerisat mit 50 % Äthylen, thermisch oxidativ vom M_{w} = 200 000 auf M_{w} = 100 000 abgebaut, zugegeben. Nach dem OCP-Eintrag wird die Temperatur auf 140 Grad C erhöht und innerhalb 6 Stunden die Mischung zu einer stabilen Emulsion dispergiert.

Polymerisatgehalt: 60,2 %
Viskosität bei 100 Grad C: ca. 6 000 mm²/s
Viskosität (2,4 %ig in Mineralöl _{η100 Grad C} = 5,5 mm²/s)
100 Grad C = 11,6 mm²/s
40 Grad C = 71,6 mm²/s
VIB = 142

### b) Herstellung der erfindungsgemäßen Polymeremulsion durch Abmischen der OCP-Emulsion mit d-Oligomer (d-OM)

830 g der 60,2 %igen OCP-Emulsion werden in einem 2 I-Dreihalsrundkolben mit Rührer, Thermometer und Dosierleitung vorgelegt und bei ca. 50 Grad C mit 500 g d-Oligomer (Viskosität bei 100 Grad C = 360 mm²/s) verdünnt. Man erhält eine stabile Emulsion (2 Stunden bei 4 000 UPM in der Zentrifuge, keine Auftrennung).

Viskosität bei 100 Grad C = 580 mm²/s

### Beispiel 2

### Herstellung des d-Oligomeren

Im Dreiliterkolben mit Magnetrührer, Thermometer, Destillationsaufsatz und N₂-Einleitung werden 1 120 g Tetralin vorgelegt und unter N₂ auf 140 Grad C erwärmt. In das heiße Lösungsmittel wird ein Gemisch aus:
- 347,8 g: Methacrylsäureester von alkoxyliertem Butanol (= statistisches Anlagerungsprodukt von Ethylenoxid und Propylenoxid an Butanol bzw. Ethylenglykolmonobutylether, M_{w} = 2 000 Dalton)
- 692,1 g: Methacrylsäureester von isomeren Isodecylalkoholen
- 640,0 g: Methacrylsäureester des Alkohols Dobanol 25 L (Shell AG), Gemisch aus C₁₁-C₁₆-Alkoholen
- 10,1 g: 2,2-Bis-(t-butylperoxy)butan 50 Gew.-% gelöst in Aliphaten (Produkt Interox Bu-50-AL der Fa. Interox Corp.)

innerhalb von 3 Stunden kontinuierlich zudosiert. Die Vorlage mit dem Monomerengemisch wird dabei auf 50 Grad C erwärmt und gerührt. Nach Zulaufende wird bei 140 Grad C 16 mal im Abstand von 30 min jeweils 2,07 ml Initiatorlösung zugegeben. 30 min nach der letzten Zugabe wird auf 60 Grad C abgekühlt und im Vakuum (2 mbar) das Tetralin abdestilliert bis zu einer Sumpftemperatur von 163 Grad C. Ausbeute: 1 663 g dispergierwirksames Oligomer

## Patentansprüche

1. Polymeremulsionen aus zur Verbesserung des Viskositätsindex geeigneten Poly(meth)acryl-säureestern und Olefincopolymeren zur Verwendung als Öladditive,
dadurch gekennzeichnet,
daß die Polymeremulsion gebildet wird aus einer kontinuierlichen Phase bestehend aus Poly(meth)acrylsäureestern mit birnodaler Molekulargewichtsverteilung, aus einem stabilisierenden Mittel für die Phasenverteilung bestehend aus einem Pfropf- oder Blockpolymerisat aus Olefincopolymerisat und Methacrylsäureestern und einer in der kontinuierlichen Phase verteilten dispersen Phase aus Olefincopolymerisaten.

2. Polymeremulsionen gemäß Anspruch 1, dadurch gekennzeichnet, daß die bimodale Molekulargewichtsverteilung der Poly(meth)acrylsäureester den einen Schwerpunkt im hochpolymeren Bereich mit einem gewichtsmittleren Molekulargewicht von 50 000 bis 500 000 und den anderen Schwerpunkt im Bereich 3 000 bis 30 000 g/mol besitzt.

3. Polymeremulsionen nach Anspruch 1, dadurch gekennzeichnet, daß die Olefincopolymeren ein gewichtsmittleres Molekulargewicht im Bereich 5 000 bis 150 000 g/mol besitzen.

## Claims

1. Polymer emulsions of poly(meth)acrylic acid esters and olefin copolymers which are suitable for improving viscosity index for use as oil additives, characterised in that the polymer emulsion is formed from a continuous phase comprising poly(meth)acrylic acid esters with a bimodal molecular weight distribution, and which contains as a stabilising agent for the phase distribution a graft or block polymer of olefin copolymer and methacrylic acid esters and distributed in the continuous phase a dispersed phase of olefin copolymers.

2. Polymer emulsions according to claim 1, characterised in that the bimodal molecular weight distribution of the poly(meth)acrylic acid esters has one centre of mass in the high-polymeric range with a weight average molecular weight of 50 000 to 500 000 and another centre of mass in the range 3000 to 30 000 g/mol.

3. Polymer emulsions according to claim 1, characterised in that the olefin copolymers have a weight average molecular weight in the range 5 000 to 150 000 g/mol.

## Revendications

1. Emulsions de polymères à base de copolymères d'oléfines et de poly[ester d'acide (méth)acrylique]s appropriés à l'amélioration de l'indice de viscosité, pour utilisation en tant qu'additifs pour huiles,
caractérisées en ce que
l'émulsion de polymère est formée à partir d'une phase continue constituée de poly[ester d'acide (méth)acrylique]s à distribution bimodale de masses moléculaires, d'un agent stabilisant pour la distribution de phases, constitué d'un polymère séquencé ou greffé de copolymère d'oléfine et esters d'acide méthacrylique, et d'une phase de copolymères d'oléfines dispersée dans la phase continue.

2. Emulsions de polymères selon la revendication 1,
caractérisées en ce que
la distribution bimodale de masses moléculaires des polyester d'acide (méth)acrylique]s présente un centre de gravité dans le domaine des hauts polymères avec une masse moléculaire moyenne en poids de 50 000 à 500 000 et l'autre centre de gravité dans la plage de 3 000 à 30 000 g/mole.

3. Emulsions de polymères selon la revendication 1,
caractérisées en ce que
les copolymères d'oléfines ont une masse moléculaire moyenne en poids dans la plage de 5 000 à 150 000 g/mole.
